# EUROPÄISCHE PATENTSCHRIFT

(11) **EP 1 310 072 B1**
(45) Veröffentlichungstag und Bekanntmachung des Hinweises auf die Patenterteilung: **05.05.2010**
(21) Anmeldenummer: 01949454.1
(22) Anmeldetag: 02.07.2001
(51) Int. Cl.: H04L 27/26

(54) **FREQUENZ- UND ZEIT-SYNCHRONISATION EINES OFDM-EMPFÄNGERS MITTELS MAXIMUM-LIKELIHOOD-DECODIERUNG**
FREQUENCY AND TIME SYNCHRONISATION OF AN OFDM RECEIVER BY MEANS OF MAXIMUM LIKELIHOOD DECODING
SYNCHRONISATION FREQUENTIELLE ET TEMPORELLE D'UN RECEPTEUR A MULTIPLEXAGE FREQUENTIEL OPTIQUE AU MOYEN D'UN DECODAGE A VRAISEMBLANCE MAXIMALE

(30) Priorität: 16.08.2000 DE 10039902
(43) Veröffentlichungstag der Anmeldung: 14.05.2003
(73) Patentinhaber: Rohde & Schwarz GmbH & Co. KG, 81671 München (DE)
(72) Erfinder: BOTT, Rainer, 82346 Andechs (DE); PENSEL, Karlheinz, 85354 Freising (DE); KOROBKOV, Dimitri, 60332 Frankfurt (DE)
(74) Vertreter: Körfer, Thomas
(86) Internationale Anmeldenummer: PCT/EP2001/007541
(87) Internationale Veröffentlichungsnummer: WO 2002/015508

(56) Entgegenhaltungen:
- EP-A- 0 915 597
- US-A- 5 802 117
- BEEK VAN DE J-J ET AL: "SYNCHRONIZATION OF A TDMA-OFDM FREQUENCY HOPPING SYSTEM" VTC'98. 48TH. IEEE VEHICULAR TECHNOLOGY CONFERENCE. OTTAWA, CANADA, Bd. 2 CONF. 48, 18. Mai 1998 (1998-05-18), Seiten 1290-1294, XP000895106 NEW YORK, NY, IEEE, USA ISBN: 0-7803-4321-2
- HUNG C-P ET AL: "JOINT FREQUENCY AND SYMBOL SYNCHRONIZATION SCHEMES FOR AN OFDM SYSTEM" WIRELESS PERSONAL COMMUNICATIONS, KLUWER ACADEMIC PUBLISHERS, NL, Bd. 10, Nr. 3, August 1999 (1999-08), Seiten 309-317, XP000831348 ISSN: 0929-6212
- JORDAN R ET AL: "Decoding of woven convolutional codes and simulation results" 2000 IEEE INTERNATIONAL SYMPOSIUM ON INFORMATION THEORY (CAT. NO.00CH37060), 2000 IEEE INTERNATIONAL SYMPOSIUM ON INFORMATION THEORY, SORRENTO, ITALY, 25-30 JUNE 2000, Seite 96 XP002178337 2000, Piscataway, NJ, USA, IEEE, USA ISBN: 0-7803-5857-0
- MENGALI U. ET AL: "SYNCHRONIZATION TECHNIQUES FOR DIGITAL RECEIVERS" 1997 , PLENUM PRESS , NEW YORK, US XP002178338 Seite 80, Zeile 6 -Seite 84, Zeile 17 Seite 91, Zeile 1 -Seite 92, Zeile 26 Abbildung 3.3

## Beschreibung

Die Erfindung betrifft ein Verfahren zur Frequenz- und Zeit-Synchronisation eines Empfängers für den Empfang von OFDM-Signalen, die nach dem Frequenzsprungverfahren in sprunghaft wechselnden Sendefrequenz-Abschnitten (Hops) übertragen werden.

Zur Datenübertragung finden in der modernen Digitaltechnik sogenannte Orthogonal Frequency Division and Multiplexing (OFDM)-Systeme Anwendung. Bei diesem Prinzip wird der digitale Datenstrom vor der Aussendung durch sogenanntes Mapping in komplexwertige Symbole umgewandelt und in eine Vielzahl von Teilsignalen aufgespalten, von denen jedes auf einem gesonderten Träger getrennt übertragen wird. Beim sogenannten DVB-T-(Digital Video Broadcasting)-System werden beispielsweise 1.705 bzw. 6.817 solche Einzelträger benutzt. Im Empfänger werden diese Teilinformationen wieder zu einer Gesamtinformation des senderseitigen digitalen Datenstromes zusammengefaßt. Dieses OFDM-System ist bekannt und wird beispielsweise näher beschrieben in HERMANN ROHLING, THOMAS MAY, KARSTEN BRÜNINGHAUS und RAINER GRÜNHEID, Broad-Band OFDM Radio Transmission for Multimedia Applications, Proceedings of the IEEE, Bd. 87, Nr. 10, Oktober 1999, S. 1778 ff.

In der modernen Übertragungstechnik über Funkkanäle wird zur Kompensation von Fading-Einbrüchen im Kanal oftmals ein sogenanntes Frequenzsprungverfahren (Frequency Hopping) angewendet, bei dem in sprunghaft wechselnden Sendefrequenz-Abschnitten (Hops) von beispielsweise nur 5 ms Dauer die Nutzinformation übertragen wird.

Wenn diese beiden an sich bekannten Systeme kombiniert angewendet werden und OFDM-Signale nach dem Frequenzsprungverfahren über Funkkanäle übertragen werden, muß dafür gesorgt werden, daß der Empfänger exakt bezüglich Frequenz und Zeit auf die in den einzelnen Hops übertragenen OFDM-Blöcke synchronisiert ist. Durch Bewegung von Sender und/oder Empfänger bzw. durch Unterschiede in der Frequenz von Sender und Empfänger können Doppler- und Frequenzverschiebungen der einzelnen Träger des OFDM-Signals entstehen, die aufgrund der Frequenzagilität nicht konstant sind, sondern sich auf jedem der aufeinanderfolgenden Frequenzabschnitte entsprechend der Bewegungsgeschwindigkeit bzw. der Übertragungsfrequenz auf dem jeweiligen Frequenzabschnitt ändern. Es ist daher erforderlich, daß in jedem der einzelnen aufeinanderfolgenden Sendefrequenz-Abschnitten der Empfänger exakt auf die einzelnen Träger des OFDM-Signals bezüglich Frequenz synchronisiert ist.

Außerdem ist darauf zu achten, daß der Empfänger auch bezüglich Zeit exakt auf den Beginn der OFDM-Signalpakete (OFDM-Blöcke) synchronisiert ist. Durch Laufzeitunterschiede beispielsweise in Abhängigkeit von der Entfernung zwischen Sender und Empfänger treffen diese OFDM-Blöcke nicht immer zur selben Sollzeit am Empfänger ein.

Alle bisher bekannten Synchronisationsverfahren benötigen redundante Formationen in den Empfangssignalen, auf die sich der Empfänger synchronisieren soll. Zum Synchronisieren eines TDMA-OFDM-Frequenzsprungsystems ist es beispielsweise bekannt, das Synchronisationskriterium im Zeitbereich aus der Redundanz der zyklischen Erweiterung (Cyclic-Prefix) abzuleiten (BEEK VAN DE J-J ET AL: ,SYNCHRONIZATIONOF A TDMA-OFDM FREQUENCY HOPPING SYSTEM' VTC'98. 48TH. IEEE VEHICULAR TECHNOLOGY CONVERENCE. OTTAWA, CANADA, Bd. 2 CONF. 48, 18. Mai 1998 (1998-05-18), Seiten 1290-1294, XP000895106 NEW YORK, NY, IEEE, USA ISBN: 0-7803-4321-2). Dazu muss eine Vielzahl von aufeinanderfolgenden OFDM-Blöcken ausgewertet werden. Bei diesem bekannten Verfahren werden zur Synchronisation keine Informationen der Kodierung ausgenutzt. Entsprechendes gilt für andere bekannte Synchronisationsverfahren (EP-A-0 915 597 (SONY INT EUROP GMBH) 12. Nau 1999 (1999-05-12); US-A-5 802 117 (GHOSH MONISHA) 1. September 1998 (1998-09-01); HUNG C-P ET AL: 'JOINT FREQUNECY AND SYMBOL SYNCHRONIZATION SCHEMES FOR AN OFDM SYSTEM'WIRELESS PERSONAL COMMUNICATIONS, KLUWER ACADEMIC PUBLISHERS; NL, Bd. 10, Nr. 3, August 1999 (1999-08), Seiten 309-317, XP000831348 ISSN: 0929-6212), welche die Übertragung von zusätzlichen Synchronisationssequenzen in den Datenblöcken voraussetzen.

Es ist daher Aufgabe der Erfindung, für einen Empfänger zum Empfang von OFDM-Signalen, die nach dem Frequenzsprungverfahren übertragen werden, ein Verfahren aufzuzeigen, mit dem ohne spezielle Synchronisationssequenzen des Signals, dieser Empfänger auf das OFDM-Signal in jedem Frequenzabschnitt (Hop) sowohl bezüglich Frequenz als auch bezüglich Zeit synchronisiert werden kann.

Diese Aufgabe wird ausgehend von einem Verfahren laut Oberbegriff des Hauptanspruches durch dessen kennzeichnende Merkmale gelöst. Vorteilhafte Weiterbildungen ergeben sich aus den Unteransprüchen.

Gemäß der Erfindung wird in jedem Frequenzabschnitt in einer zweidimensionalen Suchphase vor der eigentlichen Demodulation und Decodierung des OFDM-Signals im Empfänger - basierend auf einer Auswertung der Qualität des empfangenen OFDM-Signals bezüglich Frequenz und Zeit - das optimale Qualitätskriterium hierfür ermittelt und dann der Empfänger auf dieses so ermittelte optimale Qualitätskriterium synchronisiert.

Die Erfindung wird im folgenden anhand schematischer Zeichnungen an einem Ausführungsbeispiel näher erläutert.

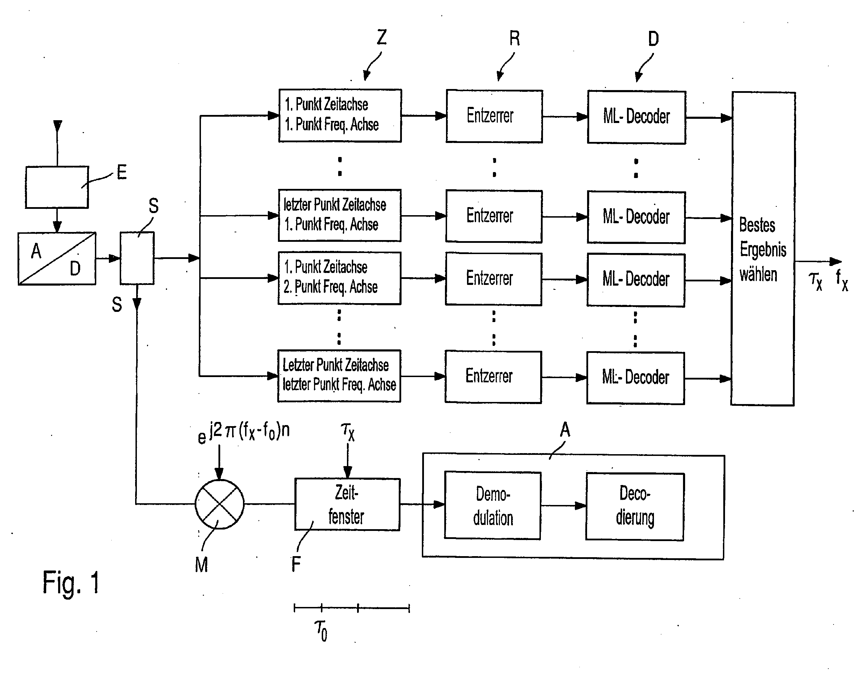

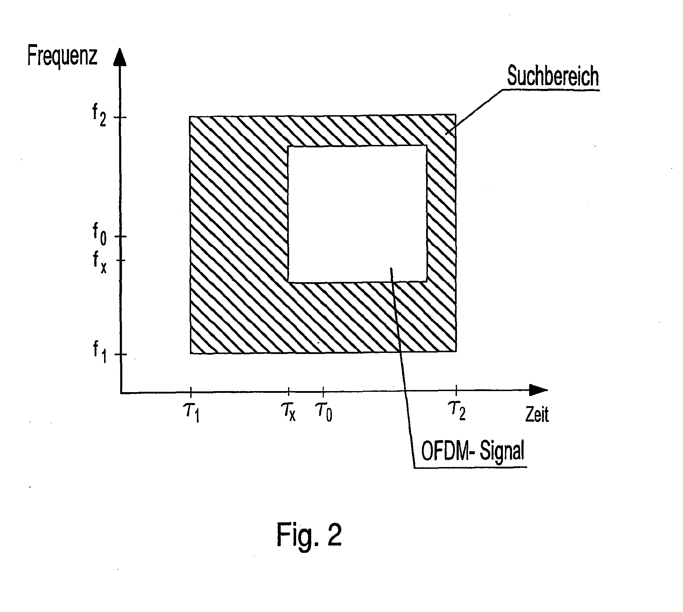

Fig. 1 zeigt das Prinzipschaltbild eines Hochfrequenzempfängers zum Empfang von OFDM-Signalen, die nach dem Frequenzsprungverfahren übertragen werden. Das in üblicher Weise durch einen analogen Hochfrequenzempfangsteil E in sprunghaft wechselnden Sendefrequenzabschnitten empfangene OFDM-Signal wird in einem Analog/Digital-Wandler A/D digitalisiert und in einem Speicher S zwischengespeichert. Der Empfangsteil E ist in üblicher Weise als Frequenzsprungempfänger ausgebildet, er kennt das Frequenzsprungschema des Senders und schaltet automatisch beispielsweise im Rhythmus von z.B. 5 ms zwischen den einzelnen Frequenzen um. Zur digitalen Signalverarbeitung des OFDM-Signals ist eine zweidimensionale Frequenz- und Zeit-Sucheinrichtung Z vorgesehen, mittels welcher während einer Suchphase beispielsweise während eines einzigen Sendefrequenzabschnittes für jeden Abtastwert des A/D-Wandlers in einem vorbestimmten Frequenzbereich f₁ bis f₂, in welchem der nominelle Frequenzwert f₀ des Empfängers liegt, das frequenzmäßige Qualitätskriterium des empfangenen OFDM-Signals bestimmt wird. Gemäß Fig. 2 bildet also der Frequenz-Suchbereich zwischen f₁ und f₂ die eine Dimension des zweidimensionalen Suchbereiches. Die andere Dimension dieses Suchbereiches bildet ein Zeit-Suchbereich zwischen τ₁ und τ₂ mit dem nominellen Zeitbeginn τ₀ des OFDM-Signals. In diesem zweidimensionalen -Frequenz-Zeit-Suchbereich f₁ bis f₂ bzw. τ₁ bis τ₂ wird nun für jeden Punkt jeweils das Qualitätskriterium des empfangenen OFDM-Signals bestimmt. Die Schrittweite, mit der der Frequenzbereich f₁ bis f₂ abgesucht wird, ist abhängig von der Art des OFDM-Signals und dem zu erwartenden maximalen Unterschied zwischen nomineller Frequenzlage f₀ und tatsächlicher Frequenzlage fₓ des Signals. Die Schrittweite in der Zeitachse ist bestimmt durch die Abtastrate des A/D-Wandlers, die Schrittweite kann ein Vielfaches eines Abtastwertes betragen. In Fig. 2 ist der gesamte Suchbereich schraffiert dargestellt.

Das Qualitätskriterium des OFDM-Signals während des Suchlaufes wird vorzugsweise durch eine Maximum-Likelihood-Schätzung bestimmt, indem für jeden Punkt dieses Frequenz-Zeit-Suchbereiches das OFDM-Signal demoduliert und anschließend in einem Maximum-Likelihood-Decoder D ausgewertet wird. Hierbei wird vorausgesetzt, daß der verwendete Code des OFDM-Signals so beschaffen ist, daß der ML-Decoder für jeden Sendefrequenz-Abschnitt (Hop) eine vollständige Decodierung durchführen kann. Vorzugsweise werden auf einem Hop terminierende Codes benutzt, beispielsweise ein BCH-Code oder vorzugsweise auch sogenannte Woven Codes mit einem äußeren und einem damit verketteten inneren Faltungscode, wie sie beispielsweise beschrieben sind in Host, S. Johannesson, R. und Zyablov, V.: "A First encounter with binary woven convolutional codes", In. Proc. International Symposium on Communication Theory and Application, Lake District, UK, Juli 1997 bzw. Host, S.: On Woven Convolutional Codes. Ph.D. Thesis, Lund University, 1999. ISBN 91-7167-016-5, http:/www.it.lth.se/stefanh/thesis/. Solche ML-Decoder haben bei ihrer Ausbildung als sogenannte soft output-Decoder die Eigenschaft, daß sie als Ergebnis der Decodierung neben den decodierten Bits auch ein Qualitätskriterium liefern. Dieses Qualitätskriterium ist bei einem ML-Decoder im allegemeinen die sogenannte Distanz zwischen dem Eingangssignal des Decoders und dem decodierten Ausgangssignal des Decoders, meist in Form der euklidischen Distanz. Auch sogenannte APP-Decoder sind für diesen Zweck geeignet, sie liefern als Qualitätskriterium der empfangenen OFDM-Signale die a posteriori-Wahrscheinlichkeit, ein Qualitätskriterium, das ebenfalls für den erfindungsgemäßen Zweck geeignet ist.

Nach Ermittlung der Qualitätskriterien für jeden einzelnen Punkt des Suchbereiches wird daraus der Punkt mit dem optimalen Qualitätskriterium der Frequenz fₓ sowie der Zeit τₓ ermittelt, wie dies in Fig. 2 für das momentan empfangene OFDM-Signal schematisch angedeutet ist. Es ist dann nur noch erforderlich, daß der Empfänger diese Frequenzdifferenz zwischen fₓ und f₀ ausgleicht und das zwischengespeicherte OFDM-Signal beginnend mit τₓ weiter verarbeitet. Dazu wird das zwischengespeicherte OFDM-Signal im Zeitbereich mit einer komplexen Schwingung multipliziert (Multiplizierer M), die gebildet wird aus der Differenz der nominellen Frequenz f₀ und der Frequenz fₓ für optimales Qualitätskriterium. In der Zeitfensterselektion F des Empfangskanals werden beginnend mit τₓ die Abtastwerte des eigentlichen Orthogonalitätsintervalls des empfangenen OFDM-Signals in einer digitalen Auswerteeinrichtung A demoduliert und decodiert.

Der Suchbereich muß so gewählt werden, daß der Empfänger den Hop des Senders korrekt empfangen kann. Nach Abschluß eines ersten Suchlaufes ist zwar die Frequenz und Zeit ungefähr bekannt und der Empfänger synchronisiert, aufgrund von Ausbreitungsbedingungen sowie Bewegungen des Senders und/oder des Empfängers ergeben sich jedoch langsame Driften und Fluktationen, die ebenfalls kompensiert werden müssen. Da die Lage des OFDM-Signals ungefähr bekannt ist, muß nach dem ersten Suchlauf während der anschließenden üblichen Nachführphase des Signals für jeden Hop nicht mehr der gesamte Suchbereich wie beim vorhergehenden Suchvorgang abgesucht werden, es genügt vielmehr, nur in der Umgebung der vorab ermittelten optimalen Werte zu suchen und mit Hilfe des Decoders wiederum das Optimum zu bestimmen und damit dann den Empfänger nachzuführen. Da das Optimum sich langsam ändern kann, wird während dieser Nachführphase der aufgrund des optimalen Qualitätskriteriums ermittelte Frequenz- und Zeitwert fₓ bzw. τₓ über ein adaptives Filter nachgeführt, wobei vorzugsweise ein sogenanntes Kalman-Filter eingesetzt wird..

Zur Unterstützung des Suchvorgangs kann im OFDM-Signal eine spezielle Synchronisationssequenz vorgesehen sein, z.B. in Form eines speziellen Bitmusters, das während eines Hops für den Suchvorgang ausgesendet wird, so daß dem Empfänger zusätzlich zum Qualitätskriterium auch noch durch Vergleich des Bitmusters ein weiteres Synchronisationskriterium zur Verfügung steht.

Anstelle des Maximum-likelihood-Kriteriums des Decoders kann in diesem Fall auch ein direkter Maximum-Likelihood-Vergleich zwischen gesendetem und empfangenen Signal durchgeführt werden, da das Sendesignal im Empfänger ja bekannt ist. Diese Synchronisationsequenz kann sowohl zu Beginn der Aussendung gesendet werden als auch periodisch während der laufenden Aussendung.

Das empfangene und zwischengespeicherte OFDM-Signal wird im allgemeinen im Übertragungskanal mehr oder weniger stark verzerrt. Diese Verzerrungen können Auswirkungen auf die zweidimensionale Suche haben, d.h. durch eine solche Verzerrung kann das Optimum des Qualitätskriteriums verschoben werden. Es ist daher vorteilhaft, das Signal vor der zweidimensionalen Suchauswertung zu entzerren. Dazu sind die Entzerrer R gemäß Fig. 1 vorgesehen, die den ML-Decodern D vorgeschaltet sind und die Signale für jeden Punkt des Suchbereiches entsprechend entzerren. Eine Möglichkeit der Entzerrung besteht darin, daß hierzu die mit dem OFDM-Signal übertragenen Pilottöne ausgewertet werden, die im allgemeinen zur Phasensynchronisation benutzt werden und gemäß der Erfindung zusätzlich für die Entzerrung eingesetzt werden können. Aufgrund der bekannten Phasenlagen dieser Pilottöne zueinander sowie deren bekannten Amplituden können die statischen Kanalverzerrungen in bekannter Weise ermittelt werden. Der Entzerrer R erhält damit Kenntnis über den Phasen- und Amplitudengang des Übertragungskanals zwischen Sender und Empfänger und kann das OFDM-Signal entsprechend entzerren. Dies kann beispielsweise dadurch geschehen, daß jeder OFDM-Träger mit einem komplexen Wert multipliziert wird, der dem Amplituden- und Phasengang des Übertragungskanals entspricht. Wenn die OFDM-Träger nur mittels Phasen- oder Frequenzmodulation moduliert sind, genügt eine Multiplikation mit einem Phasenwert, der als Ergebnis der Schätzung des Phasengangs des Übertragungskanals erhalten wird. Wird der Träger jedoch amplitudenmoduliert, so muß mit dem Inversen des geschätzten Amplitudenganges multipliziert werden (Division). Bei kombinierter Amplituden- und Phasenmodulation, wie dies beispielsweise für höherwertige QAM-Modulationen der Fall ist, muß der betroffene Träger durch den komplexen geschätzten Wert der Übertragungsfunktion des Übertragungskanals bei der Trägerfrequenz dividiert werden.

Bei dieser Entzerrung mit Hilfe der Pilottöne wird nicht die Information des gesamten OFDM-Signals ausgenutzt. Da nach der ersten Schätzung und Decodierung des OFDM-Signals die decodierte übertragene Nutzinformation und damit auch infolge der Kenntnis des verwendeten Codes die Prüfinformation des OFDM-Signals im Empfänger vorliegt, kann durch Wiedercodierung eine zuverlässigere Information über die Qualität erhalten werden. Das wiedercodierte Daten-Signal kann nun wieder zu einem OFDM-Signal moduliert werden und es wird wieder eine Distanz zwischen dem regenerierten Signal sowie dem ursprünglich empfangenen Signal ermittelt und diese Distanz ist dann direkt ein Maß für den Amplituden- und Phasengang des Übertragungskanals und kann in einer zweiten Schätzung anstelle der Kanalinformation, die über die Pilottöne erhalten wurde, für die Kanalschätzung verwendet werden. Dies ist besonders vorteilhaft in der Nachführphase des Empfängers. Mit dieser zweifachen Entzerrung, Demodulation und Decodierung wird die Störsicherheit wesentlich erhöht.

Das erfindungsgemäße Verfahren gestattet eine vollständige Synchronisation des Empfängers bereits nach einem einzigen Sendefrequenzabschnitt (Hop). Der zweidimensionale Suchvorgang für die Ermittlung des optimalen Qualitätskriteriums einschließlich Entzerrung kann gemäß Fig. 1 parallel in mehreren entsprechenden Auswertzweigen erfolgen, auch eine serielle Auswertung nacheinander für die einzelnen Punkte des Suchbereiches ist denkbar.

Anstelle der oben beschriebenen zweidimensionalen Suche kann bei im Empfänger bekannter und konstanter Empfangsfrequenz auch nur in Zeitrichtung gesucht werden. Ist die zeitliche Synchronisation im Empfänger bekannt und konstant, so genügt eine Suche im Frequenzbereich.

## Patentansprüche

1. Verfahren zur Frequenz- und Zeit-Synchronisation eines Empfängers für den Empfang von Orthogonal Frequency Division and Multiplexing (OFDM)-Signalen, die nach dem Frequenzsprungverfahren in sprunghaft wechselnden Frequenzabschnitten übertragen werden,
**dadurch gekennzeichnet, dass**
a) das Empfangssignal im Empfänger auf der nominellen Frequenz (fₒ) empfangen, digitalisiert und zwischengespeichert wird,
b) für jeden Rasterpunkt eines zweidimensionalen Frequenz-Zeit-Rasters, das in der einen Dimension einem die nominelle Frequenz (fₒ) des OFDM Signals einschließenden Frequenz-Suchbereich (f1 bis f2) und in der anderen Dimension einem den nominellen Anfang (τₒ) des ODFM Signals einschließenden Zeitsuchbereich (τ1 bis τ₂) entspricht, in bekannter Weise das Empfangssignal-Bewertungskriterium des digitalen OFDM-Signals bestimmt wird,
c) daraus dann der Rasterpunkt mit den besten Bewertungskriterium-Werten für Frequenz (fₓ) und zeitlichen Anfang (tₓ) des OFDM Signals ausgewählt wird,
d) dann die Differenz zwischen der nominellen Frequenz. (fₒ) und dem Frequenzwert (fₓ), welcher dem ermittelten besten Wert des EmpfangssignalBewertungskriteriums entspricht, bestimmt wird und
e) mit dieser Differenz die Frequenzablage des OFDM-Signals gegenüber der nominellen Frequenz (fₒ) korrigiert wird und so das Empfangssgignals frequenzmäßig synchronisiert wird, und
f) schließlich beginnend mit dem Zeitwert (τₓ), welcher dem ermittelten Rasterpunkt mit dem besten Wert des Empfangssignals-Bewertungskriteriums entspricht, das OFDM-Signal demoduliert und decodiert wird.

2. Verfahren nach Anspruch 1,
**dadurch gekennzeichnet,**
**daß** das Empfangssignal-Bewertungskriterium durch eine Maximum-Likelihood-Schätzung mittels eines Maximum-Likelihood-Decoders bestimmt wird.

3. Verfahren nach Anspruch 2,
**dadurch gekennzeichnet,**
**daß** als Empfangssignal-Bewertungskriterium die Distanz zwischen dem OFDM-Signal am Eingang und dem OFDM-Signal am Ausgang des Maximum-Likelihood-Decoders bestimmt wird.

4. Verfahren nach Anspruch 1,
**dadurch gekennzeichnet,**
**daß** das Empfangssignal-Bewertungskriterium durch die a posteriori-Wahrscheinlichkeits-Schätzung mittels eines a posteriori probability (APP)-Decoders bestimmt wird.

5. Verfahren nach einem der vorhergehenden Ansprüche,
**dadurch gekennzeichnet,**
**daß** die Codierung des OFDM-Signals so gewählt ist und zur Ermittlung des Empfangssignal-Bewertungskriteriums ein derartiger Decoder benutzt wird, daß der Decoder für jeden Frequenzabschnitt eine vollständige Decodierung durchführt.

6. Verfahren nach Anspruch 5,
**dadurch gekennzeichnet,**
**daß** die Codierung des OFDM-Signals auf die Länge des Frequenzabschnitts terminiert ist.

7. Verfahren nach einem der vorhergehenden Ansprüche,
**dadurch gekennzeichnet,**
**daß** das OFDM-Signal nach einem Woven Code bestehend aus der Verkettung eines äußeren und eines inneren Faltungscodes codiert ist.

8. Verfahren nach einem der vorhergehenden Ansprüche,
**dadurch gekennzeichnet,**
**daß** zur Frequenz-Synchronisierung das OFDM-Signal mit einer komplexen Schwingung multipliziert wird, die der Differenz zwischen dem nominellen Frequenzwert (f₀) und dem über das beste Empfangssignal-Bewertungskriterium ermittelten Frequenzwert (fₓ) entspricht.

9. Verfahren nach einem der vorhergehenden Ansprüche,
**dadurch gekennzeichnet,**
**daß** zur Synchronisation des Empfängers zu Beginn einer Sendung oder periodisch oder aperiodisch während der Sendung vom Sender während eines Frequenzabschnittes eine Synchronisationssequenz in Form eines speziellen Bitmusters ausgesendet wird und damit das beste Empfangssignal-Bewertungskriterium ermittelt wird.

10. Verfahren nach Anspruch 9,
**dadurch gekennzeichnet,**
**daß** das Empfangssignal-Bewertungskriterium durch einen Maximum-Likelihood-Vergleich zwischen gesendetem und empfangenem Signal ermittelt wird ohne Verwendung eines Decoders.

11. Verfahren nach einem der vorhergehenden Ansprüche,
**dadurch gekennzeichnet,**
**daß** vor der Ermittlung des besten Empfangssignal-Bewertungskriteriums mit Hilfe der im OFDM-Signal übertragenen Pilottöne die Übertragungsfunktion des Übertragungskanals für jeden Träger des OFDM-Signals geschätzt und in Abhängigkeit davon das OFDM-Signal entzerrt wird.

12. Verfahren nach Anspruch 11,
**dadurch gekennzeichnet,**
**daß** nach der Ermittlung des besten Empfangssignal-Bewertungskriteriums aufgrund des durch Schätzung der Übertragungsfunktion entzerrten OFDM-Signals das OFDM-Signal demoduliert und decodiert wird und mit Hilfe dieses decodierten OFDM-Signals anschließend eine weitere Kanalschätzung und Entzerrung, Demodulation und Decodierung des OFDM-Signals durchgeführt wird.

13. Verfahren nach einem der vorhergehenden Ansprüche,
**dadurch gekennzeichnet,**
**daß** nach der ersten Synchronisation des Empfängers in der Nachführphase die zweidimensionale Suche nach dem besten Empfangssignal-Bewertungskriterium innerhalb eines reduzierten Frequenz-Zeit-Suchbereiches wiederholt wird und die dadurch gewonnenen Frequenz- und Zeitwerte des besten Empfangssignal-Bewertungskriteriums jeweils über ein adaptives Filter zur Frequenznachführung bzw. Zeitsynchronisation zugeführt werden.

14. Verfahren nach Anspruch 13,
**dadurch gekennzeichnet,**
**daß** das adaptive Filter ein Kalman-Filter ist.

15. Verfahren nach einem der vorhergehenden Ansprüche,
**dadurch gekennzeichnet,**
**daß** anstelle der zweidimensionalen Suche nur eine Suche entweder im Zeit- oder Frequenz-Suchbereich durchgeführt wird.

## Claims

1. Method for frequency and time synchronisation of a receiver for receiving Orthogonal Frequency Division and Multiplexing (OFDM) signals, transmitted according to the frequency hop method in discontinuously changing frequency hops,
**characterized in that**
a) the received signal is received at the nominal frequency (f₀), digitised and stored temporarily in the receiver,
b) for each grid point of a two-dimensional frequency-time grid, which in one dimension corresponds to a frequency search domain (f₁ to f₂) including the nominal frequency (f₀) of the OFDM signal, and in the other dimension corresponds to a time search domain (τ₁ to τ₂) including the nominal start (τ₀) of the OFDM signal, the received signal evaluation criterion of the digital OFDM signal is determined in a known manner,
c) the grid point with the best evaluation criterion values for frequency (fₓ) and temporal start (τₓ) of the OFDM signal is selected from this,
d) then the difference between the nominal frequency (f₀) and the frequency value (fₓ) corresponding to the determined best value of the received signal evaluation criterion is established, and
e) the centre frequency error of the OFDM signal is corrected with respect to the nominal frequency (f₀) by this difference, and the received signal is thus synchronised with regard to frequency, and
f) finally the OFDM signal is demodulated and decoded starting with the time value (τₓ) corresponding to the determined grid point with the best value of the received signal evaluation criterion.

2. Method according to Claim 1,
**characterized in that**
the received signal evaluation criterion is established by a maximum likelihood estimation by means of a maximum likelihood decoder.

3. Method according to Claim 2,
**characterized in that**
the distance between the OFDM signal at the input and the OFDM signal at the output of the maximum likelihood decoder is established as received signal evaluation criterion.

4. Method according to Claim 1,
**characterized in that**
the received signal evaluation criterion is established by a *posteriori* probability estimation by means of an a *posteriori* probability (APP) decoder.

5. Method according to one of the preceding claims,
**characterized in that**
the coding of the OFDM signal is chosen in such a way, and a decoder of such a kind is used to determine the received signal evaluation criterion, that the decoder carries out full decoding for each frequency hop.

6. Method according to Claim 5,
**characterized in that**
the coding of the OFDM signal is terminated at the length of the frequency hop.

7. Method according to one of the preceding claims,
**characterized in that**
the OFDM signal is coded according to a woven code consisting of the concatenation of an outer and an inner convolutional code.

8. Method according to one of the preceding claims,
**characterized in that**,
for frequency synchronisation, the OFDM signal is multiplied by a complex oscillation corresponding to the difference between the nominal frequency value (f₀) and the frequency value (fₓ) determined via the best received signal evaluation criterion.

9. Method according to one of the preceding claims,
**characterized in that**,
for synchronisation of the receiver, at the start of a transmission or periodically or aperiodically during the transmission by the sender during a frequency hop, a synchronisation sequence in the form of a special bit pattern is transmitted, and with it the best received signal evaluation criterion is determined.

10. Method according to Claim 9,
**characterized in that**
the received signal evaluation criterion is determined by a maximum likelihood comparison between sent and received signal, without using a decoder.

11. Method according to one of the preceding claims,
**characterized in that**,
before determination of the best received signal evaluation criterion, with the aid of the pilot tones transmitted in the OFDM signal, the transmission function of the transmission channel is estimated for each carrier of the OFDM signal, and the OFDM signal is equalised as a function thereof.

12. Method according to Claim 11,
**characterized in that**,
after determination of the best received signal evaluation criterion, the OFDM signal is demodulated and decoded on the basis of the OFDM signal equalised by estimating the transmission function, and further channel estimation and equalisation, demodulation and decoding of the OFDM signal are subsequently carried out with the aid of this decoded OFDM signal.

13. Method according to one of the preceding claims,
**characterized in that**,
after the first synchronisation of the receiver, in the tracking phase the two-dimensional search for the best received signal evaluation criterion is repeated within a reduced frequency and time search domain, and the thus acquired frequency and time values of the best received signal evaluation criterion are supplied to frequency tracking or time synchronisation via an adaptive filter in each case.

14. Method according to Claim 13,
**characterized in that**
the adaptive filter is a Kalman filter.

15. Method according to one of the preceding claims,
**characterized in that**,
instead of the two-dimensional search, only one search is carried out, in either the time or the frequency domain.

## Revendications

1. Procédé pour une synchronisation fréquentielle et temporelle d'un récepteur pour la réception de signaux à multiplexage fréquentiel optique (OFDM), qui sont transmis selon le procédé à sauts de fréquence dans des segments de fréquences changeant par sauts,
**caractérisé en ce que**
a) le signal de réception est reçu, numérisé et mémorisé dans le récepteur à la fréquence nominale (fₒ),
b) pour chaque point de trame d'une trame fréquence-temps bidimensionnelle, qui correspond dans une des dimensions à une zone de recherche de fréquence (f1 à f2) comprenant la fréquence nominale (fₒ) du signal OFDM et dans l'autre dimension à une zone de recherche de temps (τ₁ à τ₂) comprenant le début nominal (Tₒ) du signal OFDM, le critère d'évaluation de signal de réception du signal OFDM est déterminé de manière connue,
c) à partir de là, ensuite, le point de trame est sélectionné avec les meilleures valeurs du critère d'évaluation pour une fréquence (fₓ) et un début temporel (tₓ) du signal OFDM,
d) ensuite la différence entre la fréquence nominale (fₒ) et la valeur de fréquence (fₓ), qui correspond à la meilleure valeur du critère d'évaluation du signal de réception, est déterminée et
e) la dérive de fréquence du signal OFDM par rapport à la fréquence nominale (fₒ) est corrigée par cette différence et ainsi le signal de réception est synchronisé selon la fréquence, et
f) enfin, le signal OFDM est démodulé et décodé en commençant par la valeur temporelle (τₓ), qui correspond au point de trame déterminé avec la meilleure valeur du critère d'évaluation du signal de réception.

2. Procédé selon la revendication 1, **caractérisé**
**en ce que** le critère d'évaluation de signal de réception est déterminé par une évaluation de la vraisemblance maximum au moyen d'un décodeur de vraisemblance maximum.

3. Procédé selon la revendication 2, **caractérisé**
**en ce que** la distance entre le signal OFDM à l'entrée du décodeur à vraisemblance maximum et le signal OFDM à la sortie du décodeur de vraisemblance maximum est déterminée en tant que critère d'évaluation de signal de réception.

4. Procédé selon la revendication 1, **caractérisé**
**en ce que** le critère d'évaluation de signal de réception est déterminé grâce à l'évaluation à probabilité a posteriori grâce à un décodeur à probabilité a posteriori (APP).

5. Procédé selon l'une quelconque des revendications précédentes, **caractérisé**
**en ce que** le codage du signal OFDM est sélectionné et un décodeur de ce type est utilisé pour déterminer le critère d'évaluation de signal de réception de sorte que le décodeur effectue un décodage complet pour chaque segment de fréquence.

6. Procédé selon la revendication 5, **caractérisé**
**en ce que** le codage du signal OFDM est planifié sur la longueur du segment de fréquence.

7. Procédé selon l'une des revendications précédentes, **caractérisé**
**en ce que** le signal OFDM est codé selon un code tissé constitué d'une concaténation d'un code convolutif externe et d'un code convolutif interne.

8. Procédé selon l'une des revendications précédentes, **caractérisé**
**en ce que**, pour une synchronisation de fréquence, le signal OFDM est multiplié par une oscillation complexe, qui correspond à la différence entre la valeur de fréquence nominale (f₀) et la valeur de fréquence (fₓ) déterminée par l'intermédiaire du meilleur critère d'évaluation de signal de réception.

9. Procédé selon l'une des revendications précédentes, **caractérisé**
**en ce qu'**une séquence de synchronisation sous la forme d'un modèle de bit spécial est émise en vue d'une synchronisation du récepteur au début d'une émission ou périodiquement ou apériodiquement pendant l'envoi par l'émetteur pendant un segment de fréquence et ainsi le meilleur critère d'évaluation de signal de réception est déterminé.

10. Procédé selon la revendication 9, **caractérisé**
**en ce que** le critère d'évaluation de signal de réception est déterminé par une comparaison à vraisemblance maximum entre le signal envoyé et le signal reçu sans utilisation d'un décodeur.

11. Procédé selon l'une des revendications précédentes, **caractérisé**
**en ce que** la fonction de transmission du canal de transmission pour chaque porteuse du signal OFDM est évaluée avant la détermination du meilleur critère d'évaluation de signal de réception à l'aide de sons pilotes transmis dans le signal OFDM et le signal OFDM est corrigé selon ceux-ci.

12. Procédé selon la revendication 11, **caractérisé**
**en ce que** le signal OFDM est démodulé et décodé après la détermination du meilleur critère d'évaluation de signal de réception grâce au signal OFDM corrigé par l'évaluation de la fonction de transmission et à l'aide de ce signal OFDM décodé sont effectués ensuite une autre évaluation de canal et une correction, une démodulation et un décodage du signal OFDM.

13. Procédé selon l'une des revendications précédentes, **caractérisé**
**en ce que**, après la première synchronisation du récepteur lors de la phase de réglage, la recherche bidimensionnelle du meilleur critère d'évaluation de signal de réception est répétée à l'intérieur d'un zone de recherche fréquence-temps réduite et les valeurs de fréquence et de temps ainsi obtenues du meilleur critère d'évaluation de signal de réception sont délivrées respectivement par l'intermédiaire d'un filtre adaptatif pour un réglage de fréquence ou une synchronisation de temps.

14. Procédé selon la revendication 13, **caractérisé**
**en ce que** le filtre adaptatif est un filtre de Kalman.

15. Procédé selon l'une des revendications précédentes, **caractérisé**
seule une recherche soit dans la zone de recherche temporelle soit dans la zone de recherche de fréquence est effectuée au lieu d'une recherche bidimensionnelle.
